# EUROPEAN PATENT SPECIFICATION

(11) **EP 2 458 524 B1**
(45) Date of publication and mention of the grant of the patent: **15.08.2018**
(21) Application number: 10192584.0
(22) Date of filing: 25.11.2010
(51) Int. Cl.: G06F 21/31, G06F 21/32

(54) **Identifying a user of a mobile electronic device**
Identifizierung eines Benutzers eines tragbaren elektronischen Gerätes
Identification d'un utilisateur de dispositif électronique mobile

(43) Date of publication of application: 30.05.2012
(73) Proprietor: Deutsche Telekom AG, 53113 Bonn (DE)
(72) Inventor: Roshandel, Mehran, 13591 Berlin (DE); Heister, Ulrich, 63322 Rödermark (DE); Ketabdar, Hamed, 10713 Berlin (DE)
(74) Representative: Vossius & Partner Patentanwälte Rechtsanwälte mbB

(56) References cited:
- WO-A1-2006/030065
- WO-A1-2010/112677
- US-A1- 2001 047 488
- US-A1- 2002 107 649
- US-A1- 2007 294 529
- US-A1- 2009 320 123
- MANTYJARVI J ET AL: "Identifying users of portable devices from gait pattern with accelerometers", IEEE INTERNATIONAL CONFERENCE ON ACOUSTICS, SPEECH, AND SIGNAL PROCESSING, (ICASSP 2005). 18-23 MARCH 2005 PHILADELPHIA, PA, USA, vol. 2, 23 March 2005 (2005-03-23), pages 973-976, XP002630187, IEEE Piscataway, NJ, USA ISBN: 0-7803-8874-7
- LIU RONG ET AL: "Identification of Individual Walking Patterns Using Gait Acceleration", PROCEEDINGS OF ICBBE 2007,, 1 July 2007 (2007-07-01), pages 543-546, XP031116111, IEEE, Piscataway, NJ, USA ISBN: 978-1-4244-1120-7

## Description

### Technical Field

The present invention relates to a method according to independent claim 1 and more particularly to a computer program for implementing the mentioned invention on a mobile device and such a mobile device. Subject-matter of the invention can be used for identifying a user of a mobile device having an acceleration sensing unit and thereby providing security on the mobile phone.

### Background Art

In today's daily life, mobile devices are one of essentials used for communication, storage and service access. As mobile devices' technology develops, they are used more and more for storing different data, text, audio, photos, etc. Often, some of this data can have private or confidential content. Further, mobile devices are also becoming a gateway to connect to many different services such as e-mail, e-banking and the like. Most of these services can also be related to business and confidential or private aspects of user's life. However, there is always a risk that these confidential data or services are exposed to unauthorized people, for instance when a mobile phone is lost or stolen.

For preventing unauthorized access to certain services or to the mobile device as a whole, mobile devices commonly include security functionalities such as locking mechanisms. For example, if a personal digital assistant (PDA) or a smartphone is left somewhere, a locking mechanism such as a power-on password or personal identification number (PIN) could prevent whoever found it from casually browsing content, racking up calls and sending e-mails. However, even though providing protection to a certain extent, passwords can be shared, guessed or stolen. Thereby, enforcing minimum password length and complexity rules can make password authentication more effective, but this additional effectiveness typically decreases usability. Compared to laptops, mobile devices such as PDAs and smart phones are used more frequently for shorter tasks demanding near-instantaneous availability. Often, security functionalities that get in the way such as the mentioned authentication methods are even completely disabled. This is often the main reason that passwords or PINs are not used on mobile devices. Convenience often trumps security, especially if nothing enforces policy.
Similar arguments can be applied to other security functionalities known in the art such as other means of identification or authentication as, e.g., finger print, face profile, voice based verification or the like. All these approaches are intermittent and therefore susceptible to attack, e.g., an unauthorized user can access a portable computer either by stealing a password or exploiting an open account of a user.
US 2007/0294529 A1 describes a method and apparatus for protecting data stored in a mobile device including gait analysis using motion sensors of the mobile device.
There is a need for a convenient identification of a user of a mobile device without substantially impairing regular operation of the mobile device allowing an efficient protection of the mobile device.

### Disclosure of the Invention

According to the invention this need is settled by a method for identifying a user of a mobile device having an acceleration sensing unit as it is defined by the features of independent claim 1, by a computer program as it is defined by the features of independent claim 10 and by a mobile device as it is defined by the features of independent claim 11. Preferred embodiments are subject of the dependent claims.

In particular, the invention deals with a method for identifying a user of a mobile device having an acceleration sensing unit, comprising: predefining a pattern of a movement of the mobile device wherein pattern signals comprising pattern acceleration signals sensed by the acceleration sensing unit are recorded during regular physical activities of the user of the mobile device together with the mobile device; obtaining data based on ongoing signals comprising ongoing acceleration signals sensed by the acceleration sensing unit; comparing the obtained data with the predefined pattern; and initiating a security function if the obtained data does not correspond to the predefined pattern. In this context, mobile device particularly relates to portable electronic devices such as mobile phones, smartphones, personal digital assistants (PDA), media players such as MP3-players, combinations thereof and the like. The acceleration sensing unit can comprise, e.g., acceleration sensors or accelerometers integrated in the mobile device. Typically, such acceleration sensors or accelerometers are used for automatic screen rotation, navigation or the like. Integrated in a mobile device they usually provide linear acceleration information along x, y and z directions. Thereby, the acceleration signals sensed can be due to different sources, wherein in the context of the present invention components of acceleration caused by physical activities of the user of the mobile device, or also by unexpected events such as free falls, impacts or the like can be of particular interest. These components can usually appear in high frequency of varying acceleration signals. Lower frequency components can be mainly due to gravity force, movements of the user in a vehicle or the like. The term "correspond" in the context of the obtained data and the predefined pattern relates to an analysis if the obtained data fulfils a criterion with regard to the predefined pattern or not. This can comprise an analysis if the obtained data equals the pattern, if the obtained data is within a range of the pattern as well as if the obtained data is above or below a threshold of the pattern. Regular physical activity in this context relates to activities of the user being typical in daily live. For example, a regular physical activity can be walking with the mobile device in a pocket or bag.

The method according to the invention allows for continuously identifying or authenticating the user of the mobile device on the fly by an analysis of physical movement data during the user's regular physical activities such as walking, climbing stairs or the like. Thereby, physical movement data is captured by the acceleration sensing unit such as accelerometer or acceleration sensors commonly embedded in modern mobile devices. In particular, the predefined pattern can represent a biometric sign or behaviour of the user such that the user can be identified by the mobile device according to the obtained data corresponding to the predefined pattern. Furthermore, the user can be automatically identified in a passive way without involving his active attention and without requiring him to actively performing any action such as inputting a password, PIN or the like. Like this, the implicit and continued identification process can be convenient enough for preventing the user to avoid identification such that the mobile device can efficiently be protected. Thus, the method according to the invention allows for increasing security of data and service access on mobile devices based on analysis of movement data captured by the mobile device performed continuously as the user is regularly using or carrying the mobile device.

Furthermore, the method according to the invention can be used to increase security of data and service access on the mobile device as a stand alone technique or complementary to regular authentication techniques. For example, it can protect an open account from an unauthorized user. In addition, as complement of regular authentication techniques such as a PIN code, signature, finger print, or the like, the number of regular re-authentications can be reduced if it is detected that the same user is continuously using the device. Moreover, the implicit security protection process can be used to implement a "graded security" scheme for data and service access. In this scheme, a security level score can be estimated based on the outcome the movement analysis. According to the estimated security level, different access policies can be established. This scheme allows protecting data and services according to their importance, as well as the security thread level of the mobile device.

Preferably, the security function comprises blocking at least a part of the mobile device wherein the at least part of the mobile device is kept in an accessible state while the obtained data correspond to the predefined pattern. In this context, part of the mobile device relates to physical or functional portions of the mobile device such as buttons, touch screens and the like or applications, windows and the like, respectively. Accessible state in this context relates to accessibility of the mobile device or parts thereof for the user such as keeping the mobile device unblocked or the like. With such a blocking and unblocking functionality, the mobile device can conveniently be kept unblocked or accessible while the user being identified according to movements and, eventually, audio or acoustical situation and blocked as soon as the user is not properly identified. In such a blocked state, the user can, e.g., be obliged to actively unblock the mobile device, for example by inputting a PIN or password, prior accessing it again. Such a method allows for a convenient and secure operation of the mobile device. For example, when the mobile device is carried by the user, e.g. in his pant pocket, it can capture sample motion and audio information, and check for a biometric sign in them corresponding to the predefined pattern. In this way, the identity of the user can be verified in an automatic, continuous and implicit manner, i.e. the user does not need to actively participate in authentication process. In fact, it is possible that the user only performs his regular activities and within the method according to the invention it is looked for a biometric sign in his pattern of physical activities. As mentioned, such implicit authentication method can be used alone or complementary to regular authentication methods. For example, prior being accessible at all it can be necessary for the user input a pin code or the like. Thereafter, the device can automatically detect that if it is being carried or operated by the same user or not.

The mobile device has a microphone, the pattern signals comprise pattern acoustical signals sensed by the microphone which are recorded during the regular physical activities of the user of the mobile device together with the mobile device and obtaining the data is based on the ongoing signals comprising ongoing acoustical signals sensed by the microphone. Mobile devices having an acceleration sensing unit as well as a microphone are widely known in the art. For example, today's so called smartphones such as the smartphones of Apple Inc. labelled with the trademark iPhone often have acceleration sensors or accelerometers as well as a microphone. Within such a method, the pattern can be predefined by defining data or a sequence of data obtainable in a time interval based on the acceleration signals and additionally also based on the acoustical or audio signals. Further, obtaining data based on the signals sensed by the microphone can also comprise extraction of particular features, wherein such features can be based on average, variance, rate of change and/or the like of the sensed signal within the time frame. Evaluating data obtained from signals of the acceleration sensing unit and additionally of the microphone allows for an improved identification of the user of the mobile device. Thus, the usability of the method and the quality of protection of the mobile device can be improved.

Preferably, the ongoing signals are filtered while obtaining the data. Such filtering can be performed by processing the ongoing signals with a time derivative operation which allows, e.g., for high pass filtering the ongoing signals with regard to ongoing acceleration signals appearing in a comparably high frequency compared to ongoing acceleration signals occurring in a comparably low frequency. Since lower frequency acceleration signals often result from gravity force, continuous movements such as movements of a vehicle or the like, such high pass filtering can contribute to efficiently identifying accelerations of the mobile device caused by physical activities of the user of the mobile device. Similar filtering can also be applied to the pattern signals while predefining the pattern.

Preferably, predefining the pattern of the movement of the mobile device comprises extracting a feature from the pattern signals within a time interval and obtaining the data comprises extracting the feature from the ongoing signals within the time interval. The term "feature" in this context relates to characteristics of raw or filtered signals or data of the acceleration sensing unit and/or of the microphone. Thereby, such features can be based on average, variance and/or rate of change of the signals. For instance, the average of norm of the acceleration signals, e.g. along x, y and z directions in the time interval can indicate the level of physical movement of the device within the interval. Such feature extraction allows for an efficient and quick evaluation and analysis of the obtained data with regard to the pattern.

Preferably predefining the pattern comprises creating a statistical model wherein the statistical model can be a multilayer perceptron. Multilayer perceptron (MLP) in this context can relate to a feedforward artificial neural network model that maps sets of input data onto a set of appropriate output. A MLP can consist of multiple layers of nodes in a directed graph which is fully connected from one layer to the next. Except for the input nodes, each node can be a neuron or processing element with a nonlinear activation function. MLP can utilize a supervised learning technique called backpropagation for training the network. Specific situation in this context relates to a situation or event which might be relevant for security of the mobile device such as a non-identified user carrying the mobile device, losing the mobile device or the like. By means of a statistical model and in particular of a MLP, the pattern can efficiently and precisely be defined. Thereby, creating the statistical model comprises training the multilayer perceptron during the regular physical activities of the user of the mobile device together with the mobile device. Like this, the multilayer perceptron (MLP) can be able to classify the sample movement, e.g., represented by features, as regular movement of the user or not.

Preferably, the method further comprises: predefining a further pattern of a further movement of the mobile device; associating a further security function to the further predefined pattern; and initiating the further security function if the obtained data correspond to the further predefined pattern. The further pattern in this context can represent a security relevant event such as an event potentially being related to a risky situation of the mobile device. Further security function or further security event thereby relates to events intending to enhance the security of the mobile device such as locking the mobile device, deleting sensitive data, keeping the mobile device in an unlocked status or the like. Like this, the analysis of physical movement data captured by the mobile device can indicate unexpected or risky events which can lead to or caused by the phone being lost, stolen or the like. Therefore, such a method allows for improving security of the mobile device.

A further aspect of the invention relates to a computer program being adapted to be executed on a mobile device having an acceleration sensing unit, comprising program code adapted to be executed to implement the method according to any one of the preceding claims on the mobile device. Such a computer program allows for a convenient and efficient implementation of the method according to the invention as well as for an easy distribution.

Another further aspect of the invention relates to a mobile device having an acceleration sensing unit and a security structure, wherein the security structure comprises a patterning unit being adapted to predefine a pattern of a movement of the mobile device by recording pattern signals comprising pattern acceleration signals sensed by the acceleration sensing unit during regular physical activities of a user of the mobile device together with the mobile device; a data obtaining unit being adapted to obtain data based on ongoing signals comprising ongoing acceleration signals sensed by the acceleration sensing unit; an analysing unit being adapted to compare the obtained data with the predefined pattern; and a triggering unit being adapted to initiate a security function if the obtained data does not correspond to the predefined pattern. Such arrangement of the mobile device allows for providing a mobile phone having the method according the invention and the corresponding identification and or protection mechanisms implemented.

Preferably, the triggering unit of the mobile device is adapted to initiate the security function which comprises blocking at least a part of the mobile device such that the at least part of the mobile device is kept in an accessible state while the obtained data correspond to the predefined pattern. The mobile device preferably further has a microphone wherein the pattering unit is adapted to predefine the pattern based on the pattern signals comprising pattern acoustical signals sensed by the microphone which are recorded during the regular physical activities of the user of the mobile device together with the mobile device, and the data obtaining unit is adapted to obtain the data based on the ongoing signals comprising ongoing acoustical signals sensed by the microphone. Preferably, the data obtaining unit is adapted to filter the ongoing signals. The patterning unit preferably is adapted to extract a feature from the pattern signals within a time interval and the data obtaining unit is adapted to extract the feature from the ongoing signals within the time interval. Preferably, the patterning unit further is adapted to predefine the pattern by creating a statistical model wherein the statistical model can be a multilayer perceptron. Thereby, the patterning unit preferably is adapted to create the statistical model by training the multilayer perceptron during the regular physical activities of the user of the mobile device together with the mobile device. Preferably, the patterning unit is adapted to predefine a further pattern of a further movement of the mobile device and the triggering unit is adapted to initiate a further security function associated to the further predefined pattern if the obtained data correspond to the further predefined pattern. All these preferred arrangements of the mobile device according to the invention allow for providing a mobile phone having implemented preferred aspects of the method according the invention as described above.

These and other aspects of the invention will be apparent from and elucidated with reference to the embodiment(s) described hereinafter.

### Mode(s) for Carrying Out the Invention

One embodiment of the method according to the invention, of the computer program according to the invention and of the mobile device according to the invention relates to unexpected event detection. Unexpected events experienced by a mobile device can be a sign of security threads. In the following, a few scenarios of unexpected events which can lead to security threads related to mobile devices are further described as examples wherein other scenarios are also possible. In particular, it is described how these events or situations can be detected based on analysis of captured motion and audio information, i.e. obtained data based on motion and acoustical signals, using sensors embedded in a mobile phone as mobile device.

A first such scenario can be that if a mobile phone has not been moved for a comparably long period of time, this may indicate a situation in which the mobile phone is lost or forgotten somewhere. This might result in security risk for data or services accessible via the mobile phone. This situation can be identified by analyzing motion data obtained from embedded acceleration sensors of the mobile phone as a acceleration sensing unit. This motion data can comprise a rate of change as extracted feature. By predefining a pattern of the movement of the mobile phone as being a comparably low rate of change during a comparably long period of time, a criterion to compare with the obtained data is set. If the obtained data meets the criterion or corresponds to the pattern, the mentioned situation is detected and an according security function is initiated or triggered. I.e., upon detection of this situation, the mobile phone can be locked requesting user re-authentication as security function initiated on the mobile phone.

A second such scenario can be when the user of the mobile phone is engaged in high level of physical activity such as, e.g., running or sports. In such a situation, attention of the user to his mobile phone may be reduced, resulting in a higher risk of loosing the mobile phone. Detecting such a situation based on the embedded accelerometer sensors allows setting security options on the mobile device to a higher level as security function wherein motion data of the acceleration sensors of the mobile phone are evaluated for that purpose. In particular, when obtaining data based on the signals average and variance are extracted from the motion data or signals.

Predefining the pattern is applied by assuming that the mobile phone is carried somewhere on the body such that the average and variance of the motion signals show significantly high values when the mobile phone is engaged in high level of physical activity as compared to regular situations. Thereby, the pattern is predefined as comprising accordingly high average and variance of the motion signals in order to be compared to the obtained data and to initiate an associated suitable security function. Thus, upon detection of this situation, the mobile phone can again be locked requesting user re-authentication as security function initiated on the mobile phone.

A third such scenario which can lead to or caused by the device being lost or stolen is when the mobile phone falls out of a user's pocket or bag and is left unattended for a while. The user may not notice what has happened to the mobile phone due to environmental distractions. Such a scenario can be detected based on analyzing acceleration information as mentioned above as well as audio or acoustical information obtained via a microphone of the mobile device. This unexpected event or scenario can be modelled based on three sub-events: free-fall, shock corresponding to an impact with floor and no activity or movement after the shock. When the mobile phone falls it experiences a free fall situation and upon impact with floor, it experiences a shock. However, this may not be enough for identifying the situation as risky or critical, because, e.g., the user may immediately pick up the phone. Therefore, it can additionally be necessary to check for a period of no activity after the shock.

As an example algorithm or method for detecting the third scenario, when obtaining data based on the signals, acceleration and audio data is recorded using the microphone and acceleration sensors embedded in the mobile phone through a data collection code as known in the art. For predefining the pattern, a database of normal and risky situations according to the third scenario is recorded. In this database, there are samples of normal situations, e.g. 98 normal situations, and samples of physical shock, e.g., 36 samples of physical shock. In order to obtain physical shock, the mobile phone is let to fall on a carpet or wooden floor form a certain distance such as, e.g., approximately 75 cm. In order to obtain normal condition samples, test users, e.g. five test users, are let to carry the mobile phone normally in a pocket, hand or bag for a period of time such as, e.g. for 10 seconds. These test users do different normal activities such as walking, judging, taking stairs, and taking elevator. Different variety of scenarios, especially those assumed to have similarity to a shock due to high physical activity such as taking stairs or elevator, are considered. In this way, the algorithm or method is able to distinguish between such situation and real risky situations.

As mentioned before, the risky situation of the third scenario is defined as a sequence of free fall, impact or shock and no activity period. Thus, the pattern is predefined by features representing this sequence wherein the risky situation is detected by comparing the obtained data with the pattern. I.e., the free fall is detected when the norm of acceleration signals along x-, y- and z-directions as extracted feature falls below a predefined threshold. The no-activity period is identified when the average of norm of acceleration signals as extracted feature in an interval after the impact, such as, e.g., eight seconds, falls below a threshold. The impact or shock situation is detected by comparing the features extracted from acceleration and audio data against a statistical model created for impact or shock. The model which is used for example is a multilayer perceptron (MLP) trained using the samples of shock and regular situations collected as previously mentioned. The features used are mainly based on average and variance of acceleration components as well as their norm and audio signal. By means of the MLP new samples of features as shock or normal situation can then be classified. The risky situation is detected upon detection of free fall, shock and period of no-activity in correct order. Table 1 below summarizes initial results. It can be seen that defining the three steps for risky situations or events detection can significantly reduce number of false alarms. The first row in the table shows the results when the three step definition is used, and the second row shows results when only impact is considered as risky event.

**Table 1: Results for detection of a risky situation which can lead to have the mobile device being lost or stolen.**

| **Algorithm** | **Accuracy** | **True Alarm** | **False Alarm** |
|---|---|---|---|
| 3 step definition | 94.4 | 34 | 4 |
| impact only | 86.1 | 31 | 9 |

Another embodiment of the method according to the invention, of the computer program according to the invention and of the mobile device according to the invention relates to implicit identity verification or identification based on movement and audio analysis. By applying user authentication/identification using audio and movement analysis based on regular user's physical activities such as walking, security functionalities in the mobile device, e.g. a mobile phone, can be enhanced. When the mobile device is carried by the user such as, e.g., in his pant pocket, its data obtaining unit can capture samples of audio and motion information within obtaining data based on signals comprising the acceleration signal sensed by acceleration sensors as acceleration sensing unit. The analysing unit can then check for a pattern or biometric sign in the audio and motion information. In this way, the identity of the user can be verified in a continuous and implicit manner. The authentication is implicit, so the user does not need to actively participate in authentication process. The user only performs his regular activities and the authentication method looks for the biometric sign or the predefined pattern of his physical activities. As mentioned above, this implicit authentication method can be used alone or as complementary to a regular authentication method. The mobile device can automatically detect that it is not being carried or operated by the same user anymore, therefore switch to a higher level of required authentication.

As another effect, this embodiment of the invention can reduce required number of normal authentications. If the device implicitly detects that it has been continuously used by the same person, i.e., the user, since the last authentication, it may not ask for a new authentication process for the same service. This results in reducing the burden of repetitive authentication. In addition, an implicit authentication score estimated based on audio and movement analysis can be used to set up different security thread levels for the mobile device, allowing implementation of a graded security scheme.

As an example of the implicit identity verification or identification, in the following an algorithm or method is presented which is based on audio and motion data captured by a mobile device during regular physical activities. It is shown that users can be classified with high accuracy based on captured information using a mobile phone as the mobile device in their pant pocket. With this example possibility of implicit user authentication/identification based on regular physical activities of user such as, e.g., walking can be investigated.

For the example, mobile phone motion information is recorded using embedded acceleration sensors as acceleration sensing unit as well as ambient audio using an embedded microphone. The recoding is done during regular physical activities which is walking in this case. The mobile phone such as one of the mobile phones of Apple Inc. labelled with the trademark iPhone is carried in the user's pant pocket. Thereby signals are recorded within obtaining data based on the signals comprising acceleration signals sensed by the acceleration sensors and acoustical signals sensed by the microphone.

For the example nine participants are considered as test users. Each participant is asked to record data of signals based on motion and audio signals using the mobile phone located in his pant pocket within predefining a pattern of the movement of the mobile phone. Audio signals are captured at eight Kilohertz (KHz) and acceleration signals at fifty Hertz using the embedded acceleration sensors and the microphone in the mobile phone. The mobile phone is placed regularly in the pocket without fixing its position or orientation. The test users are asked to walk for about two minutes in indoor and outdoor environments. The recording for each user is repeated over three different days with different sets of shoes and pants in order to take into account the effect of variability in clothing in the identification method.

Within obtaining the data based on the signals, feature extraction is performed wherein two sets of features are extracted. One set from the acceleration signals and one set from the audio or acoustical signals. The features are extracted over a window of two seconds. For the acceleration signals, the extracted features are mainly based on average, variance and magnitude of acceleration components. In particular, these features comprise: an average field strength along x, y, and z directions; a variance of field strength along x, y, and z directions; an average of Euclidian norm of filed strength along x, y, z; a variance of Euclidian norm of field strength along x, y, and z; and a piecewise correlation between field strength along x and y, x and z, and y and z. For audio signals, the extracted features are mainly based on average, variance, and energy of the audio signal in each window wherein variance of Fourier transform of audio signal is also used as a feature.

The extracted features are used as input to a multilayer perceptron (MLP) as statistical model when predefining the pattern for user classification or identification. Table 2 below shows classification/identification results for the different feature sets wherein results for using movement or acceleration based features, audio based features and combination of audio and movement based features are reported. As can be seen from Table 2, the combination of audio and movement based features provides the best user identification results, i.e. 90.1%. Table 3 shows identity verification or authentication measures for some of the test users. The measures show a good tradeoff between true and false alarms indicating significant user authentication results.

As mentioned, in this example, initial results for user identification/authentication over a window period of two seconds is presented. This means that every two seconds, there is the possibility to re-authenticate the user. However, such a short interval continues re-authentication may not be necessary in some practical applications. It may be enough to have an authentication measure for instance every minute. In such a case, short interval, such as, e.g., the two seconds window, based authentication results can be used in a voting scheme. The identified user over a minute is the user having highest vote or recognition in two second based windows. The example shows that user identification accuracy in this case rises to 97.5% using combination of audio and acceleration based features.

**Table 2: User identification results using different feature sets (Movement, Audio, Movement+Audio)**

| **Feature source** | **Accuracy** |
|---|---|
| Movement | 88.3 |
| Audio | 47.8 |
| Movement + Audio | **90.1** |

**Table 3: User authentication measures for some of the users**

| **User ID** | **Precision** | **Recall** | **F-measure** | **ROC Area** |
|---|---|---|---|---|
| 1 | 0.89 | 0.95 | 0.92 | 0.98 |
| 2 | 0.92 | 0.87 | 0.90 | 0.96 |
| 3 | 0.92 | 0.91 | 0.92 | 0.98 |
| 4 | 0.92 | 0.92 | 0.92 | 0.97 |
| **Weighted Average** | **0.91** | **0.91** | **0.91** | **0.97** |

While the invention has been illustrated and described in detail in the foregoing description, such description is to be considered illustrative or exemplary and not restrictive. In particular, the present invention covers further embodiments with any combination of features from different embodiments described above and below. The invention also covers all embodiments described the description and single features thereof can be disclaimed from the subject matter of the invention.

Furthermore, in the claims the word "comprising" does not exclude other elements or steps, and the indefinite article "a" or "an" does not exclude a plurality. A single unit may fulfil the functions of several features recited in the claims. The terms "essentially", "about", "approximately" and the like in connection with an attribute or a value particularly also define exactly the attribute or exactly the value. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

## Claims

1. Method for identifying a user of a mobile device having an acceleration sensing unit and a microphone, comprising:
predefining a pattern of a movement of the mobile device wherein pattern signals comprising pattern acceleration signals sensed by the acceleration sensing unit and pattern acoustical signals sensed by the microphone are recorded during regular physical activities of the user of the mobile device together with the mobile device, regular physical activities being activities of the user being typical in daily live;
obtaining data based on ongoing signals comprising ongoing acceleration signals sensed by the acceleration sensing unit and acoustical signals sensed by the microphone;
comparing the obtained data with the predefined pattern; and
initiating a security function if the obtained data does not correspond to the predefined pattern,
predefining a further pattern of a further movement of the mobile device, wherein the pattern signals comprise pattern acceleration signals sensed by the acceleration sensing unit and pattern acoustical signals sensed by the microphone which are recorded during the regular physical activities of the user of the mobile device together with the mobile device,
associating a further security function to the further predefined pattern; and
initiating the further security function if the obtained data correspond to the further predefined pattern.

2. Method according to claim 1, in which the security function comprises blocking at least a part of the mobile device wherein the at least part of the mobile device is kept in an accessible state while the obtained data correspond to the predefined pattern.

3. Method according to any one of the preceding claims, wherein the ongoing signals are filtered while obtaining the data.

4. Method according to any one of the preceding claims, wherein predefining the pattern of the movement of the mobile device comprises extracting a feature from the pattern signals within a time interval and obtaining the data comprises extracting the feature from the ongoing signals within the time interval;
wherein the feature comprises of raw or filtered signals or data of the acceleration sensing unit and/or of the microphone.

5. Method according to any one of the preceding claims, wherein predefining the pattern comprises creating a statistical model.

6. Method according to claim 5, wherein the statistical model is a multilayer perceptron.

7. Method according to claim 6, wherein creating the statistical model comprises training the multilayer perceptron during the regular physical activities of the user of the mobile device together with the mobile device.

8. Computer program being adapted to be executed on a mobile device having an acceleration sensing unit and a microphone, comprising program code adapted to be executed to implement the method according to any one of the preceding claims on the mobile device.

9. Mobile device having an acceleration sensing unit, a microphone, and a security structure, wherein the security structure comprises
a patterning unit being adapted to predefine a pattern of a movement of the mobile device by recording pattern signals comprising pattern acceleration signals sensed by the acceleration sensing unit and pattern acoustical signals sensed by the microphone during regular physical activities of a user of the mobile device together with the mobile device, regular physical activities being activities of the user being typical in daily live;
a data obtaining unit being adapted to obtain data based on ongoing signals comprising ongoing acceleration signals sensed by the acceleration sensing unit and ongoing acoustical signals sensed by the microphone;
an analysing unit being adapted to compare the obtained data with the predefined pattern; and
a triggering unit being adapted to initiate a security function if the obtained data does not correspond to the predefined pattern;
wherein the patterning unit is adapted to predefine a further pattern of a further movement of the mobile device, wherein the pattering unit is adapted to predefine the pattern based on the pattern signals comprising comprising pattern acceleration signals sensed by the acceleration sensing unit and pattern acoustical signals sensed by the microphone which are recorded during the regular physical activities of the user of the mobile device together with the mobile device;
and wherein the triggering unit is adapted to initiate a further security function associated to the further predefined pattern if the obtained data correspond to the further predefined pattern.

10. Mobile device according to claim 9, wherein the triggering unit is adapted to initiate the security function which comprises blocking at least a part of the mobile device such that the at least part of the mobile device is kept in an accessible state while the obtained data correspond to the predefined pattern.

11. Mobile device according to claim 9 or 10, wherein the data obtaining unit is adapted to filter the ongoing signals.

12. Mobile device according to any one of claims 9 to 11, wherein the patterning unit is adapted to extract a feature from the pattern signals within a time interval and the data obtaining unit is adapted to extract the feature from the ongoing signals within the time interval;
wherein the feature comprises of raw or filtered signals or data of the acceleration sensing unit and/or of the microphone.

13. Mobile device according to any one of claims 9 to 12, wherein the patterning unit is adapted to predefine the pattern by creating a statistical model.

14. Mobile device according to claim 13, wherein the statistical model is a multilayer perceptron.

15. Mobile device according to claim 14, wherein the patterning unit is adapted to create the statistical model by training the multilayer perceptron during the regular physical activities of the user of the mobile device together with the mobile device.

## Patentansprüche

1. Verfahren zum Identifizieren eines Benutzers eines tragbaren Geräts mit einer Beschleunigungsmesseinheit und einem Mikrofon, welches aufweist:
Vordefinieren eines Musters einer Bewegung des tragbaren Geräts, wobei Mustersignale, welche von der Beschleunigungsmesseinheit erfasste Beschleunigungsmustersignale und vom Mikrofon erfasste akustische Mustersignale umfassen, während gewöhnlicher physischer Aktivitäten des Benutzers des tragbaren Geräts zusammen mit dem tragbaren Gerät aufgezeichnet werden, wobei gewöhnliche physische Aktivitäten Aktivitäten des Benutzers sind, die im täglichen Leben typisch sind,
Erhalten von Daten auf der Grundlage fortlaufender Signale, welche von der Beschleunigungsmesseinheit erfasste fortlaufende Beschleunigungssignale und vom Mikrofon erfasste akustische Signale umfassen,
Vergleichen der erhaltenen Daten mit dem vordefinierten Muster und
Initialisieren einer Sicherheitsfunktion, falls die erhaltenen Daten nicht dem vordefinierten Muster entsprechen,
Vordefinieren eines weiteren Musters einer weiteren Bewegung des tragbaren Geräts, wobei die Mustersignale von der Beschleunigungsmesseinheit erfasste Beschleunigungsmustersignale und vom Mikrofon erfasste akustische Mustersignale umfassen, welche während gewöhnlicher physischer Aktivitäten des Benutzers des tragbaren Geräts zusammen mit dem tragbaren Gerät aufgezeichnet werden,
Assoziieren einer weiteren Sicherheitsfunktion mit dem weiteren vordefinierten Muster und
Initialisieren der weiteren Sicherheitsfunktion, falls die erhaltenen Daten dem weiteren vordefinierten Muster entsprechen.

2. Verfahren nach Anspruch 1, wobei die Sicherheitsfunktion ein Sperren zumindest eines Teils des tragbaren Geräts aufweist, wobei dieser Teil des tragbaren Geräts in einem zugänglichen Zustand gehalten wird, während die erhaltenen Daten dem vordefinierten Muster entsprechen.

3. Verfahren nach einem der vorhergehenden Ansprüche, wobei die fortlaufenden Signale gefiltert werden, während die Daten erhalten werden.

4. Verfahren nach einem der vorhergehenden Ansprüche, wobei beim Vordefinieren des Musters der Bewegung des tragbaren Geräts ein Merkmal innerhalb eines Zeitintervalls aus den Mustersignalen extrahiert wird, und beim Erhalten der Daten das Merkmal aus den fortlaufenden Signalen innerhalb des Zeitintervalls extrahiert wird,
wobei das Merkmal rohe oder gefilterte Signale oder Daten der Beschleunigungsmesseinheit und/oder des Mikrofons aufweist.

5. Verfahren nach einem der vorhergehenden Ansprüche, wobei beim Vordefinieren des Musters ein statistisches Modell erzeugt wird.

6. Verfahren nach Anspruch 5, wobei das statistische Modell ein mehrschichtiges Perzeptron ist.

7. Verfahren nach Anspruch 6, wobei beim Erzeugen des statistisches Modells das mehrschichtige Perzeptron während der gewöhnlichen physischen Aktivitäten des Benutzers des tragbaren Geräts zusammen mit dem tragbaren Gerät trainiert wird.

8. Computerprogramm, das eingerichtet ist, auf einem tragbaren Gerät mit einer Beschleunigungsmesseinheit und einem Mikrofon ausgeführt zu werden, welches Programmcode aufweist, der eingerichtet ist, ausgeführt zu werden, um das Verfahren nach einem der vorhergehenden Ansprüche auf dem tragbaren Gerät zu implementieren.

9. Tragbares Gerät mit einer Beschleunigungsmesseinheit, einem Mikrofon und einer Sicherheitsstruktur, wobei die Sicherheitsstruktur aufweist:
eine Mustereinheit zum Vordefinieren eines Musters einer Bewegung des tragbaren Geräts, wobei Mustersignale, welche von der Beschleunigungsmesseinheit erfasste Beschleunigungsmustersignale und vom Mikrofon erfasste akustische Mustersignale umfassen, während gewöhnlicher physischer Aktivitäten des Benutzers des tragbaren Geräts zusammen mit dem tragbaren Gerät aufgezeichnet werden, wobei gewöhnliche physische Aktivitäten Aktivitäten des Benutzers sind, die im täglichen Leben typisch sind,
eine Datenerhaltungseinheit zum Erhalten von Daten auf der Grundlage fortlaufender Signale, welche von der Beschleunigungsmesseinheit erfasste fortlaufende Beschleunigungssignale und vom Mikrofon erfasste akustische Signale umfassen,
eine Analyseeinheit zum Vergleichen der erhaltenen Daten mit dem vordefinierten Muster und
eine Auslöseeinheit zum Initialisieren einer Sicherheitsfunktion, falls die erhaltenen Daten nicht dem vordefinierten Muster entsprechen,
wobei die Mustereinheit eingerichtet ist, ein weiteres Muster einer weiteren Bewegung des tragbaren Geräts vorzudefinieren, wobei die Mustereinheit eingerichtet ist, das Muster auf der Grundlage der Mustersignale vorzudefinieren, welche von der Beschleunigungsmesseinheit erfasste Beschleunigungsmustersignale und vom Mikrofon erfasste akustische Mustersignale umfassen, welche während der gewöhnlichen physischen Aktivitäten des Benutzers des tragbaren Geräts zusammen mit dem tragbaren Gerät aufgezeichnet werden,
und wobei die Auslöseeinheit eingerichtet ist, eine weitere Sicherheitsfunktion in Zusammenhang mit dem weiteren vordefinierten Muster zu initialisieren, falls die erhaltenen Daten dem weiteren vordefinierten Muster entsprechen.

10. Tragbares Gerät nach Anspruch 9, wobei die Auslöseeinheit eingerichtet ist, die Sicherheitsfunktion zu initialisieren, welche ein Sperren zumindest eines Teils des tragbaren Geräts aufweist, so dass dieser Teil des tragbaren Geräts in einem zugänglichen Zustand gehalten wird, während die erhaltenen Daten dem vordefinierten Muster entsprechen.

11. Tragbares Gerät nach Anspruch 9 oder 10, wobei die Datenerhaltungseinheit eingerichtet ist, die fortlaufenden Signale zu filtern.

12. Tragbares Gerät nach einem der Ansprüche 9 bis 11, wobei die Mustereinheit eingerichtet ist, ein Merkmal innerhalb eines Zeitintervalls aus den Mustersignalen zu extrahieren, und die Datenerhaltungseinheit eingerichtet ist, das Merkmal innerhalb des Zeitintervalls aus den fortlaufenden Signalen zu extrahieren,
wobei das Merkmal rohe oder gefilterte Signale oder Daten der Beschleunigungsmesseinheit und/oder des Mikrofons aufweist.

13. Tragbares Gerät nach einem der Ansprüche 9 bis 12, wobei die Mustereinheit eingerichtet ist, das Muster durch Erzeugen eines statistischen Modells vorzudefinieren.

14. Tragbares Gerät nach Anspruch 13, wobei das statistische Modell ein mehrschichtiges Perzeptron ist.

15. Tragbares Gerät nach Anspruch 14, wobei die Mustereinheit eingerichtet ist, das statistische Modell durch Trainieren des mehrschichtigen Perzeptrons während der gewöhnlichen physischen Aktivitäten des Benutzers des tragbaren Geräts zusammen mit dem tragbaren Gerät zu erzeugen.

## Revendications

1. Procédé d'identification d'un utilisateur d'un dispositif mobile comportant une unité de détection d'accélération et un microphone, comprenant :
la prédéfinition d'un modèle d'un mouvement du dispositif mobile dans lequel des signaux modèles comprenant des signaux d'accélération modèles détectés par l'unité de détection d'accélération et des signaux acoustiques modèles détectés par le microphone sont enregistrés pendant les activités physiques régulières de l'utilisateur du dispositif mobile associé au dispositif mobile, les activités physiques régulières étant des activités types de l'utilisateur pendant la vie de tous les jours ;
l'obtention de données sur la base de signaux en cours comprenant des signaux d'accélération en cours détectés par l'unité de détection d'accélération et des signaux acoustiques détectés par le microphone ;
la comparaison des données obtenues au modèle prédéfini ; et
le lancement d'une fonction de sécurité si les données obtenues ne correspondent pas au modèle prédéfini,
la prédéfinition d'un autre modèle d'un autre mouvement du dispositif mobile, dans lequel les signaux modèles comprennent des signaux d'accélération modèles détectés par l'unité de détection d'accélération et des signaux acoustiques modèles détectés par le microphone qui sont enregistrés pendant les activités physiques régulières de l'utilisateur du dispositif mobile associé au dispositif mobile,
l'association d'une autre fonction de sécurité à l'autre modèle prédéfini ; et
le lancement de l'autre fonction de sécurité si les données obtenues correspondent à l'autre modèle prédéfini.

2. Procédé selon la revendication 1, dans lequel la fonction de sécurité comprend le blocage d'au moins une partie du dispositif mobile dans lequel l'au moins une partie du dispositif mobile est maintenue dans un état accessible pendant que les données obtenues correspondent au modèle prédéfini.

3. Procédé selon l'une quelconque des revendications précédentes, dans lequel les signaux en cours sont filtrés pendant l'obtention des données.

4. Procédé selon l'une quelconque des revendications précédentes, dans lequel la prédéfinition du modèle du mouvement du dispositif mobile comprend l'extraction d'une caractéristique des signaux modèles au sein d'un intervalle de temps et l'obtention des données comprend l'extraction de la caractéristique des signaux en cours au sein de l'intervalle de temps ;
dans lequel la caractéristique comprend des signaux ou données bruts ou filtrés de l'unité de détection d'accélération et/ou du microphone.

5. Procédé selon l'une quelconque des revendications précédentes, dans lequel la prédéfinition du modèle comprend la création d'un modèle statistique.

6. Procédé selon la revendication 5, dans lequel le modèle statistique est un perceptron multicouche.

7. Procédé selon la revendication 6, dans lequel la création du modèle statistique comprend la formation du perceptron multicouche pendant les activités physiques régulières de l'utilisateur du dispositif mobile associé au dispositif mobile.

8. Programme informatique adapté pour être exécuté sur un dispositif mobile comportant une unité de détection d'accélération et un microphone, comprenant un code de programme adapté pour être exécuté pour mettre en oeuvre le procédé selon l'une quelconque des revendications précédentes sur le dispositif mobile.

9. Dispositif mobile comportant une unité de détection d'accélération, un microphone et une structure de sécurité, dans lequel la structure de sécurité comprend
une unité de formation de modèle adaptée pour prédéfinir un modèle d'un mouvement du dispositif mobile en enregistrant des signaux modèles comprenant des signaux d'accélération modèles détectés par l'unité de détection d'accélération et des signaux acoustiques modèles détectés par le microphone pendant les activités physiques régulières d'un utilisateur du dispositif mobile associé au dispositif mobile, les activités physiques régulières étant les activités types de l'utilisateur pendant la vie de tous les jours ;
une unité d'obtention de données adaptée pour obtenir des données sur la base de signaux en cours comprenant des signaux d'accélération en cours détectés par l'unité de détection d'accélération et des signaux acoustiques détectés par le microphone ;
une unité d'analyse adaptée pour comparer les données obtenues au modèle prédéfini ; et
une unité de déclenchement adaptée pour lancer une fonction de sécurité si les données obtenues ne correspondent pas au modèle prédéfini,
dans lequel l'unité de formation de modèle est adaptée pour prédéfinir un autre modèle d'un autre mouvement du dispositif mobile, dans lequel l'unité de formation de modèle est adaptée pour prédéfinir le modèle sur la base des signaux modèles comprenant des signaux d'accélération modèles détectés par l'unité de détection d'accélération et des signaux acoustiques modèles détectés par le microphone qui sont enregistrés pendant les activités physiques régulières de l'utilisateur du dispositif mobile associé au dispositif mobile ;
et dans lequel l'unité de déclenchement est adaptée pour lancer une autre fonction de sécurité associée à l'autre modèle prédéfini si les données obtenues correspondent à l'autre modèle prédéfini.

10. Dispositif mobile selon la revendication 9, dans lequel l'unité de déclenchement est adaptée pour lancer la fonction de sécurité qui comprend le blocage d'au moins une partie du dispositif mobile de telle sorte que l'au moins une partie du dispositif mobile est maintenue dans un état accessible pendant que les données obtenues correspondent au modèle prédéfini.

11. Dispositif mobile selon la revendication 9 ou 10, dans lequel l'unité d'obtention de données est adaptée pour filtrer les signaux en cours.

12. Dispositif mobile selon l'une quelconque des revendications 9 à 11, dans lequel l'unité de formation de modèle est adaptée pour extraire une caractéristique des signaux modèles au sein d'un intervalle de temps et l'unité d'obtention de données est adaptée pour extraire la caractéristique des signaux en cours au sein de l'intervalle de temps ;
dans lequel la caractéristique comprend des signaux ou données bruts ou filtrés de l'unité de détection d'accélération et/ou du microphone.

13. Dispositif mobile selon l'une quelconque des revendications 9 à 12, dans lequel l'unité de formation de modèle est adaptée pour prédéfinir le modèle par création d'un modèle statistique.

14. Dispositif mobile selon la revendication 13, dans lequel le modèle statistique est un perceptron multicouche.

15. Dispositif mobile selon la revendication 14, dans lequel l'unité de formation de modèle est adaptée pour créer le modèle statistique par formation du perceptron multicouche pendant les activités physiques régulières de l'utilisateur du dispositif mobile associé au dispositif mobile.
